(19) Europäisches Patentamt
European Patent Office
Office européen des brevets

(11) Publication number: **0 342 788**
**A1**

(12) # EUROPEAN PATENT APPLICATION

(21) Application number: 89303557.6

(22) Date of filing: 11.04.89

(51) Int. Cl.4: C08K 9/06, C08K 5/54, C08L 77/00

(30) Priority: 13.04.88 JP 88994/88
20.04.88 JP 95640/88

(43) Date of publication of application:
23.11.89 Bulletin 89/47

(84) Designated Contracting States:
DE FR GB IT

(71) Applicant: Bridgestone Corporation
10-1, Kyobashi 1-Chome Chuo-Ku
Tokyo 104(JP)

(72) Inventor: Ohashi, Takashi
710-3-403, Kamiyabe-cho Totsuka-ku
Yokohama City Kanagawa Prefecture(JP)
Inventor: Ishiwaka, Takumi
20-21, Minamimaioka 2-chome Totsuka-ku
Yokohama City Kanagawa Prefecture(JP)
Inventor: Maruyama, Akihiro
1305-7, Nagatsuda-cho Midori-ku
Yokohama City Kanagawa Prefecture(JP)
Inventor: Kato, Munehiko
150-7, Kashio-cho Totsuka-ku
Yokohama City Kanagawa Prefecture(JP)

(74) Representative: Quest, Barry et al
M'CAW & Co. 41-51 Royal Exchange Cross Street
Manchester M2 7BD(GB)

(54) **Synthetic resin composition.**

(57) Resin composition comprising a polyamide resin, an inorganic filler and a surface treating agent therefor, the thermal stability of which is improved and the formed article from which can be reused for the molding formation by adding; as the surface treating agent, a silane compound

EP 0 342 788 A1

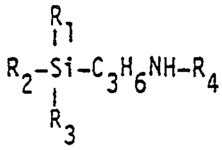

(I)

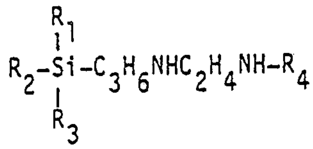

(II)

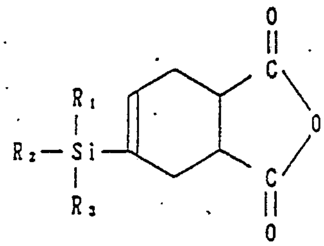

(III)

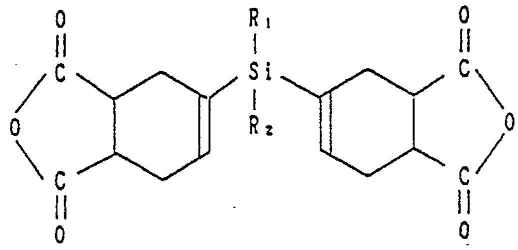

(IV)

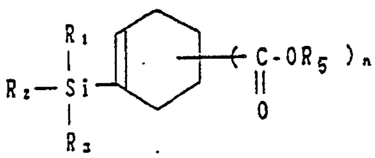

(V)

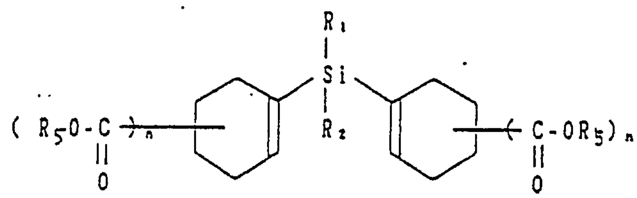

(VI)

wherein each of $R_1$, $R_2$ and $R_3$ means a lower alkoxyl, or one or two thereof mean a lower alkoxyl while the remainder means a lower alkyl, $R_4$ means either of a saturated and unsaturated $C_1$ - $C_{20}$ alkylacyl and alkylaminoacyl, $R_5$ means either of hydrogen and a lower alkyl, and n is either of 1 and 2.

# SYNTHETIC RESIN COMPOSITION

## BACKGROUND OF THE INVENTION AND RELATED ART

The invention relates to a synthetic resin composition comprising an inorganic filler such as glass fibers, calcium carbonate, pluverized ferrite and metal and more particularly to such composition, the thermal stability for moldingly forming of which is improved and the formed article from which can be reused for the molding formation by adding a surface treating agent for the filler.

Various synthetic resins have been used for the resin compositions comprising the inorganic filler as referred to above, among which polyamide resins have particularly been widely used owing to the preferred mechanical strength and the relatively low cost thereof.

The conventional synthetic resin compositions comprising the polyamide and the inorganic filler, however, are dissatisfactory in that the thermal resistance is poor so that the fluidity is considerably lowered and the forming stability is deteriorated when subjecting to a higher thermal load, and that the formed articles exposed to the high thermal load can not be recovered to be reused.

The inventors had studied the thermal deterioration of the usual polyamide resin compositions comprising the inorganic filler in order to improve the thermal stability to find out;
that the melt viscosity determined at a temperature of 250 -300 °C where the injection molding thereof was generally made was rapidly raised after the lapse of 5 - 20 minutes so that the fluidity was utterly lost in an extreme case,
that the melt viscosity of the resin composition prepared by combining the reused material in the amount of 10 - 30 weight % at the similar temperature was raised the more repidaly, i.e. in the shorter time, as the more is the combined ratio of the reused material, and
that the more considerably and in the shorter time the melt viscosity was raised as the stronger shear force was affected on the materials when preparing the polyamide resin composition comprising the inorganic filler, above all ferrite.

It was presumed from said findings that microgel was formed by strongly binding the polyamide resin with the inorganic filler at the early stage of melting of the polyamide to be kneaded together with the filler, which gradually growed as the time lapsed to be in macrogel and bound in chain or ring, as a result of which the viscosity was raised.

The inventors proceeded with the study based on the findings and the presumption on the mechanism of the viscosity increase to find out that a coupling agent of silane system having a particular molecular structure might be used as the surface treating agent for the inorganic filler to dissolve the disadvantageous problem as referred to above. In JP-A-Sho 64(1989)15904, it was proposed to use $\gamma$-ureidopropylethoxysilane as the surface treating agent.

It has been confirmed that when using the $\gamma$-ureidosilane as the surface treating agent the thermal stability and the melt viscosity increase of the resin composition may be improved, but the level of melt torque is still high and the melt fluidity is not always satisfactory.

## SUMMARY OF THE INVENTION

An object of the invention is, thus, to provide a synthetic resin composition of polyamide added with the inorganic filler, above all ferrite and the surface treating agent therefor, of which thermal stability and the melt flouidity are improved.

The other object of the invention in another aspect is to provide a method of improving the thermal stability and the melt fluidity of the polyamide resin composition inclusive of the magnetic polymer.

The still other object of the invention in the still other aspect is to provide a new surface treating agent for the inorganic filler, above all ferrite for improving the forming properties of the polyamide resin composition.

The other objects thereof and advantageous effects attained thereby may be readily appreciated by those skilled in the art by studying the detailed explanation of the invention to be given hereafter.

## DESCRIPTION OF THE DRAWINGS

Fig. 1, 2, 3 and 4 are all diagrams showing changes of the torque values with the lapse of time of the polyamide resin compositions according to the invention in comparison with those of the prior art.

## DESCRIPTION OF PREFERRED EMBODIMENTS OF THE INVENTION

According to one aspect of the invention, a compound represented by a general formula (I) or (II);

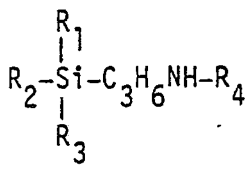

(I)

or

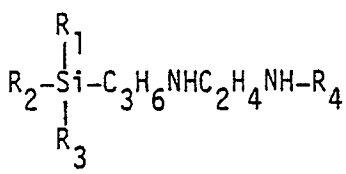

(II)

wherein $R_1$, $R_2$ and $R_3$ all mean a lower alkoxy, or one or two of $R_1$ $R_2$ and $R_3$ mean a lower alkoxy while the remainder is a lower alkyl, and $R_4$ a saturated or unsaturated $C_1$ - $C_{20}$ alkylacyl or alkylaminoacyl is used as the surface treating agent for the inorganic filler.

It is presumed to be a reason of lowering the melt torque value in comparison with the ureidocilane proposed in the Japanese Patent Application referred to in the beginning of the invention that the alkylacyl or the alkylacylamino as the end group $R_4$ may improve the intersolubility with the polyamide resin as binder.

According to another aspect of the invention, a compound represented by a general formula (III), (IV), (V) or (VI);

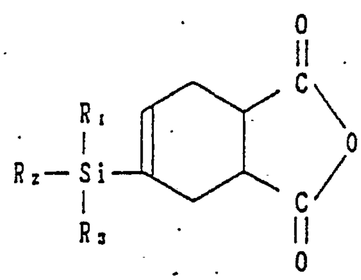

(III)

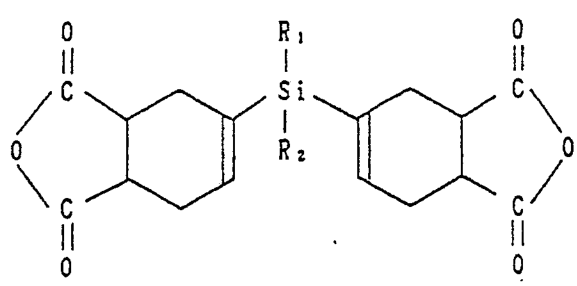

(IV)

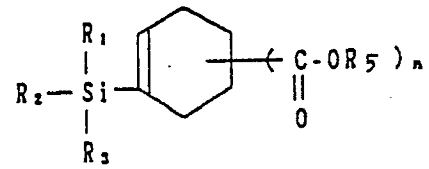

(V)

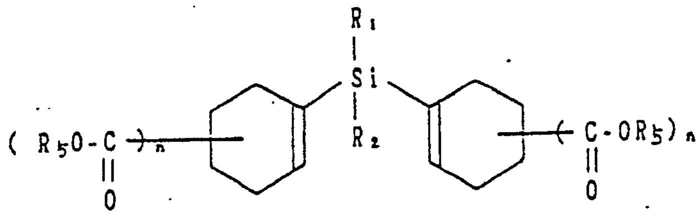

(VI)

wherein $R_1$, $R_2$ and $R_3$ means the same as given above in respect of the formulae (I) and (II), $R_5$ means hydrogen or a lower alkyl, and n is 1 or 2, is used as the surface treating agent for the inorganic filler.

This coupling agent is used in the amount of 0.1 - 5.0 weight parts, and more preferably 0.5 - 2.0 weight parts in relation to 100 weight parts of the total amount of the inorganic filler so as to obtain the polyamide resin composition having a good thermal stability and a lower melt torque value i.e. a good melt fluidity.

When the amount of the surface treating agent to be added is less than 0.1 weight parts as the lower limit, a desired lowering of the melt viscosity can not be attained, while if the amount thereof is more than 5.0 weight parts as the upper limit not only the further improvement can not be expected but also the mechanical properties of the resin composition such as the impact strength is deteriorated.

There is no particular limitation for way of adding the surface treating agent, but it is preferable to firstly apply the agent to the inorganic filler. For instance, the surface treating agent as it is or added with a diluent is applied on the pulverized filler through a funnel or by a sprayer and then homogeneously mixed according to a conventionally used mixer such as rotaly blade mixer, V-type blender and ribbon blender. When the diluent is used, it is preferably removed in vacuo or at a raised temperature.

As the polyamide resin to be used for the invention, there is no particular limitation so far as it is generally used for preparing polyamide resin composition added with the inorganic filler to be used for thermoplastically forming articles, which may be e.g. polyamide 6 and 12 as a cleaved ring of cyclic aliphatic lactam, polyamide 66, 610, 612 and M X D as a condensation polymer of a fatty acid and an aliphatic amine, polyamide 11 as a condensation polymer of amino acid or a copolymer or a polymer alloy thereof. The amount of the polyamide resin to be used is selected in the range of 5 - 90 weight % relative to the total amount of the resin composition depending on the property of the inorganic filler. It is of course possible to add, as occasion demands, an auxiliary for forming, a weather-proofing stabilizer and/or the like.

As for the inorganic filler, there is no particular limitation so far as it is generally used for preparing the polyamide resin composition, which may be fibrous filler of glass and carbon, a so-called whisker filler; pulverized metal oxide such as alumina, titanium dioxide, iron oxide and ferrite; pulverized silicate such as aluminum silicate, calcium silicate, kaolin, mica, talc; pulverized carbonate such as calcium carbonate barium carbonate; and silica such as sand, quartz powder, collolid silica, as well as various mixtures thereof. The amount of the inorganic filler is selected within the range of 10 - 95 weight % relative to the total amount of the resin composition.

The resin composition according to the invention may be heated and the melt composition is subjected to injection, extrusion or press to form articles.

The invention will be explained in more detail in the following Examples and the advantageous effects thereof demonstrated in comparison with the following Comparative Experiments.

Evaluation of the melt viscosity was made by using Laboplast Mill 20C 200 of Toyo Seiki Seisaku-sho K.K., in which 50 $cm^3$ of the tested resin composition (about 170 gr.) was taken into a chamber of the mill and mixed according to R-600H roller type blade with 50 rpm and at 300 °C for 20 minutes to observe the change of the melt torque. It goes without saying that the higher torque value means the undesirable higher melt viscosity and consequently the lower fluidity.

Examples 1 - 8

Pulverized ferrite (average particle dimension of 1.2 µm) was taken into a rotary blade mixer as the inorganic filler with metering a desired amount thereof. Under stirring at the room temperature, the surface treating agent as shown in Table 1 to be given hereafter was added in the form of 50 weight % solution in methyl alcohol/water (1:1 by weight). After the laspe of 5 minutes, the mixer was stopped for mixing and the mixture was dried in an oven by heating at 100 °C to remove the solvent.

The dried ferrite powder and the polyamide 6 resin respectively in the desired amounts was again taken in the rotary blade mixer to be homogeneously mixed. The mixture was taken in the mill to be heated and the change of melt torque value was observed for 20 minutes at a temperature of 300 °C, of which lowest values are shown in Table 1. It is noted here that all resin compositions of Examples 1 - 8 did not show any change of melt torque to give the peak during the observation. The change of the melt torque of the polyamide resin composition according to Example 6 is shown in Fig. 1.

Example 9 - 16

The homogeneous mixture was prepared just like as in Examples 1 - 8, except that polyamide 12 was used instead of polyamide 6. The lowest melt torque values of the respective resin compositions are shown also in Table 1. The change of the melt torque value of the resin composition according to Example 14 is shown in Fig. 2.

Examples 17 - 28

Various resin compositions of the polyamide and the inorganic filler added with the surface treating agent were prepared just like in Examples 1 - 8 according to the components as shown in Table 2 to be given hereafter together with the respective melt torque values.

Comparative Experiments 1 - 3

Polyamide 6 was commonly used as the resin in these experiments, and as the surface treating agent γ-aminopropyltriethoxycilane γ-ureidopropyl-triethoxycilane and N-p-(aminoethyl)-γ-aminopropyl-triemthoxycilane were used respectively in Comparative Experiments 1, 2 and 3 for preparing the polyamide resin compositions under the same conditions as in Examples 1 - 8. The lowest melt torque values thereof are shown in Table 1. As to the cases where the values are increased to show the peak values during the observation, such torque values are also shown therein. The change of the torque values of the resin compositions according to Comparative Experiments 2 and 3 are shown also in Fig. 1.

Comparative Experiments 4 - 6

Polyamide 12 was commonly used as the resin in these Experiments, and as the surface treating agent γ-aminopropyl triethoxysilane,γ-ureidopropyl-triethoxysilane and N-β-(aminoethyl)-γ-aminopropyl-trimethoxysilane were used respectively in Comparative Experiments 4, 5 and 6 for preparing the polyamide resin compositions under the same conditions as in Examples 1 - 8. The lowest melt torque values thereof are shown in Table 1. As to the cases where the values are increased to show the peak values during the observation, such torque values are also shown therein. The change of the melt torque values of the resin composition according to Comparative Experiments 5 and 6 are shown also in Fig. 2.

Comparative Experiments 7 - 18

Various resin compositions of the polyamide and the inorganic filler added with the surface treating agent were prepared just like in Examples 1 - 8 according to the components as shown in Table 2, in which the respective melt torque values are also given.

TABLE 1

(ALL FERRITE USED AS FILLER)

| | | COMPONENTS *1 | | | FLUIDITY | | |
|---|---|---|---|---|---|---|---|
| | | POLYAMIDE | SURF. TR. AGENT FORMULA*2 | SURF. TR. AGENT $R_4$ *3 | LOWEST TORQUE (Kg.m) | HIGHEST TURQUE (kg.m) | HIGHEST TORQUE TIME (min.) |
| EXAMPLE | 1 | POLYAMIDE -6 | I | $COCH_3$ | 0.81 | - *4 | - *4 |
| | 2 | | I | $COC_{11}H_{23}$ | 1.02 | - | - |
| | 3 | | I | $COC_{17}H_{35}$ | 1.01 | - | - |
| | 4 | | I | $COC_{17}H_{33}$ | 1.02 | - | - |
| | 5 | | I | $CONHC_{12}H_{25}$ | 0.83 | - | - |
| | 6 | | II | $COC_{11}H_{23}$ | 0.90 | - | - |
| | 7 | | II | $COC_{17}H_{35}$ | 1.03 | - | - |
| | 8 | | II | $COC_{17}H_{33}$ | 0.98 | - | - |
| | 9 | POLYAMIDE -12 | I | $COCH_3$ | 0.83 | - | - |
| | 10 | | I | $COC_{11}H_{23}$ | 0.84 | - | - |
| | 11 | | I | $COC_{17}H_{35}$ | 0.88 | - | - |
| | 12 | | I | $COC_{17}H_{33}$ | 0.88 | - | - |
| | 13 | | I | $CONHC_{12}H_{25}$ | 0.83 | - | - |
| | 14 | | II | $COC_{11}H_{23}$ | 0.89 | - | - |
| | 15 | | II | $COC_{17}H_{35}$ | 0.95 | - | - |
| | 16 | | II | $COC_{17}H_{33}$ | 0.92 | - | - |
| COMP. EXPER. | 1 | POLYAMIDE -6 | I | H | 1.15 | 8.96 | 13.3 |
| | 2 | | I | $CONH_2$ | 1.04 | - | - |
| | 3 | | II | H | 0.68 | 13.22 | 12.2 |
| | 4 | POLYAMIDE -12 | I | H | 1.25 | 6.23 | 12.0 |
| | 5 | | I | $CONH_2$ | 1.33 | - | - |
| | 6 | | II | H | 0.97 | 11.76 | 11.3 |

*1) Components used are 87.5 wt % of Sr ferrite (OP-71, Nihon Bengara), as inorganic filler, 12.5 wt % of polaymide resin (1011FB and 3014U, Ube Kosan respectively as polyamide-6 and polyamide-12) and 1.0 wt % of surface treating agent.

*2) Formula (I);

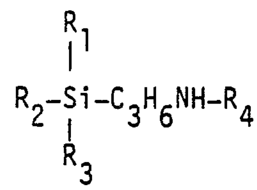

Formula (II);

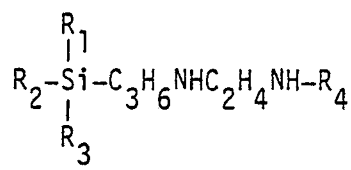

$R_1$, $R_2$ and $R_3$ all mean methoxy in Examples 3 and 6, and ethoxy in the others.

*3) $R_4$ in the above Formula (I) or (II) means a substituent group respectively shown in Table 1

*4) The symbol - means that there was observed during 20 minutes no peak of the melt torque value.

TABLE 2

| | | COMPONENTS *1 | | | | FLUIDITY | | |
|---|---|---|---|---|---|---|---|---|
| | | POLYAMIDE | INORG. FILLER | SURF. TR. AGENT *2 FORMULA | SURF. TR. AGENT *2 $R_4$ | LOWEST TORQUE (kg.m) | HIGHEST TORQUE (kg.m) | HIGHEST TORQUE TIME (min.) |
| EXAMPLE | 17 | | GLASS FIBER *4 | I | $CONHC_{12}H_{25}$ | 0.23 | - *3 | * *3 |
| | 18 | | | II | $COC_{11}H_{23}$ | 0.27 | - | - |
| | 19 | POLYAMIDE | CALCIUM CARB. | I | $CONHC_{12}H_{25}$ | 0.32 | - | - |
| | 20 | -6 | *5 | II | $COC_{11}H_{23}$ | 0.24 | - | - |
| | 21 | | IRON *6 | I | $CONHC_{12}H_{25}$ | 0.86 | - | - |
| | 22 | | | II | $COC_{11}H_{23}$ | 0.81 | - | - |
| | 23 | | GLASS FIBER | I | $CONHC_{12}H_{25}$ | 0.26 | - | - |
| | 24 | | | II | $COC_{11}H_{23}$ | 0.31 | - | - |
| | 25 | POLYAMIDE | CALCIUM CARB. | I | $CONHC_{12}H_{25}$ | 0.33 | - | - |
| | 26 | -12 | | II | $COC_{11}H_{23}$ | 0.30 | - | - |
| | 27 | | IRON | I | $CONHC_{12}H_{25}$ | 0.84 | - | - |
| | 28 | | | II | $COC_{11}H_{23}$ | 0.92 | - | - |
| COMP. EXPER. | 7 | | GLASS FIBER | I | $CONH_2$ | 0.31 | - | - |
| | 8 | | | II | H | 0.44 | 3.89 | 9.4 |
| | 9 | POLYAMIDE | CALCIUM CARB. | I | $CONH_2$ | 0.39 | - | - |
| | 10 | -6 | | II | H | 1.03 | 6.14 | 13.5 |
| | 11 | | IRON | I | $CONH_2$ | 1.00 | - | - |
| | 12 | | | II | H | 0.68 | 3.65 | 20.0 |
| | 13 | | GLASS FIBER | I | $COHH_2$ | 0.39 | - | - |
| | 14 | | | II | H | 0.52 | 5.01 | 10.4 |
| | 15 | POLYAMIDE | CALCIUM CARB. | I | $CONH_2$ | 0.48 | - | - |
| | 16 | -12 | | II | H | 1.02 | 4.70 | 10.7 |
| | 17 | | IRON | I | $CONH_2$ | 1.18 | - | - |
| | 18 | | | II | H | 0.87 | 7.44 | 12.2 |

*1) Components used are 80.0 wt % of inorganic filler (glass fiber or calcium carbonate), 20.0wt % of polyamide (Product by Ube Kosan, see the note given for Table 1) and 1.0 wt % of surface treating agent; or 90.0 wt % of iron as the inorganic filler, 10.0 wt % of polyamide (ditto) and 1.0 wt % of surface treating agent.

*2) See the Note *2 given for Table 1.

*3) See the Note *4 given for Table 1.

*4) Product (REV-1) by Nippon Ita Garasu K.K.

*5) Product (BFK-200) by Bihoku Funka Kogyo K.K.

*6) Product as pulverized reagent by Kanto Kagaku K.K.

As seen from Figs. 1 and 2, there is observed no change of the melt torque even after the lapse of 20 minutes and the value itself is relatively low as to the resin composition added with the surface treating agent, which has saturated or unsaturated alkyl acyl or alkylaminoacyl as the end group, according to the invention (Examples 6 and 14), while there is observed no change of the melt torque but the torque value is higher than the above as to the resin composition added with γ-ureidopropyl-triethoxycilane as the surface treating agent proposed in JP-A Sho62(1988)-171097 (Comparative Experiments 2 and 5). There is observed a steep increase (peak) of the melt torque as to the resin compound added with the surface treating agent having the amino end group (comparative Experiments 3 and 6). The polyamide resin compositions according to the invention (Examples 1 - 28) are all excellent in the thermal stability and the melt fluidity as shown above.

The following Examples are for the compounds of Formulae (III), (IV), (V) ane (VI) as the surface treating agents.

Examples 29 - 42

Pulverized ferrite shown in Table 3 as the inorganic filler was taken in a rotary blade miser with metering a desired amount. Under driving the mixer at the room temperature, the surface treating agent as shown in Table 3 in the form of 50 wt % solution in methyl alcohol was added therein in a desired amount. After mixing for 5 minutes, the mixture was heated in an oven at 100°C to remove the vapourable content. A particular amounts of the polyamide resin and the dried ferrite powder were taken in the mixer to be homogeneously mixed. A particular amount of the mixture was taken in the Laboplast Mill so that change of the torque of the melt was observed at 300°C for 20 minutes. The respective lowest values are shown in Table 3. There was observed no increase of torque to form a peak so far as the resin compositions according to Examples 29 - 42 are concerned. The change of the melt torque of the resin compositions according to Examples 29 and 36 are shown respectively in Figs. 3 and 4.

Comparative Experiments 19 - 28

The mixture of the inorganic filler and the surface treating agent was prepared like in Examples 29 - 42 from components as shown in Table 3 except that as the diluent for the surface treating agent the mixture of methyl alcohol with water (1:1 weight ratio was used. The homogeneous mixture of the above with the polyamide resin was prepared like in Examples 29 - 42 so as to similarly observe change of the melt torque. The lowest torque values and also the highest values as to the resin composition having shown a peak are given in Table 3.

The torque changes in respect of Comparative Experiments 29 and 33 are shown in Fig. 3 and those as

to Comparative Experiments 3S and 37 are shown in Fig. 4.

As seen from Figs. 3 and 4, there is observed no change of the melt torque even after the lapse of 20 minutes and the value itself is relatively low as to the resin composition added with the surface treating according to the invention (Examples 29 - 42), while the torque value as to the resin composition added with γ-ureidopropyl-triethoxycilane as the surface treating agent proposed in JP-A Sho 62(1988)-171097. There is observed a steep increase (peak) of the melt torque as to the resin compound added with the surface treating agent having the amino end group (Comparative Experiments 19 and 25). The polyamide resin compositions according to the invention (Examples 29 - 42) are all excellent in the thermal stability and the melt fluidity as shown above.

TABLE 3

| | | COMPONENTS *1 | | | FLUIDITY | | |
|---|---|---|---|---|---|---|---|
| | | POLYAMIDE | INORG. FILLER *2 | SURF. TR. AGENT *3 | LOWEST TORQUE (Kg.m) | HIGHEST TURQUE (kg.m) | HIGHEST TORQUE TIME (min.) |
| EXAMPLE | 29 | POLYAMIDE -6 | FERRITE | A | 0.73 | - *4 | - *4 |
| | 30 | | GLASS FIBER | A | 0.22 | - | - |
| | 31 | | CALCIUM CARB. | A | 1.14 | - | - |
| | 32 | | IRON | A | 0.75 | - | - |
| | 33 | | FERRITE | B | 0.83 | - | - |
| | 34 | | FERRITE | C | 0.77 | - | - |
| | 35 | | FERRITE | D | 0.90 | - | - |
| | 36 | POLYAMIDE -12 | FERRITE | A | 0.46 | - | - |
| | 37 | | GLASS FIBER | A | 0.20 | - | - |
| | 38 | | CALCIUM CARB. | A | 0.99 | - | - |
| | 39 | | IRON | A | 0.69 | - | - |
| | 40 | | FERRITE | B | 0.57 | - | - |
| | 41 | | FERRITE | C | 0.49 | - | - |
| | 42 | | FERRITE | D | 0.83 | - | - |
| COMP. EXPER. | 19 | POLYAMIDE -6 | FERRITE | E | 0.68 | 13.22 | 12.2 |
| | 20 | | GLASS FIBER | E | 0.44 | 3.89 | 9.4 |
| | 21 | | CALCIUM CARB. | E | 1.03 | 6.14 | 13.5 |
| | 22 | | IRON | E | 0.68 | 3.65 | 20.0 |
| | 23 | | FERRITE | F | 1.04 | - | - |
| | 24 | | GLASS FIBER | F | 0.31 | - | - |
| | 25 | POLYAMIDE -12 | FERRITE | E | 0.97 | 11.76 | 11.3 |
| | 26 | | GLASS FIBER | E | 0.52 | 5.01 | 10.4 |
| | 27 | | FERRITE | F | 1.33 | - | - |
| | 28 | | GLASS FIBER | F | 0.39 | - | - |

*1) COMPONENTS;

| | POLYAMIDE | FILLER | SURF.TR.AGENT |
|---|---|---|---|
| FERRITE | 12 | 88 | 1 |
| GLASS FIBER<br>CALCIUM CARB. | 20 | 80 | 1 |
| IRON | 10 | 90 | 1 |

*2) See the Note *1) given for Table 1 and the Nots *4), 5) and 6) for Table 2.

*3) A: 4-trimethoxysilyl-tetrahydrophthalic anhydride (Nissan Kagaku K.K.)

B: Di-(4-tetrahydro-phthalyl anhydride)-dimethoxysilane

C: Hydrolyzed product of A

D: Hydrolyzed product of B

E: N-ß-(aminoethyl)-γ-aminopropyl-trimethoxysilane (A-1120, Nippon Unicar K.K.)

F: γ-Ureidopropyl-triethoxysilane (A-1160, Ditto)

*4) See the Note *4) for Table 1.

## Claims

1. Resin composition comprising a polyamide resin, an inorganic filler and a surface treating agent therefor, in which as said surface treating agent a silane compound represented by any of the general formulae (I), (II), (III), (IV), (V) and (VI);

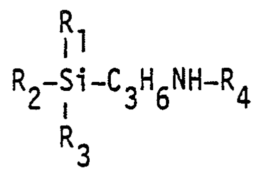

(I)

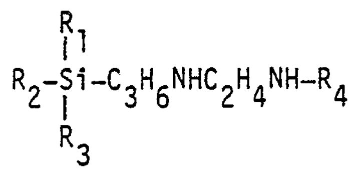

(II)

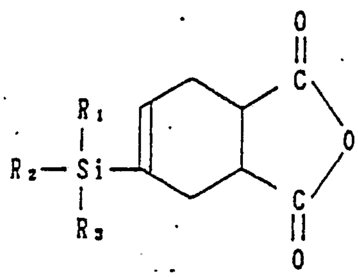

(III)

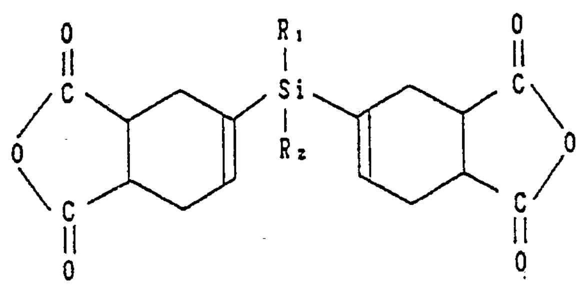

(IV)

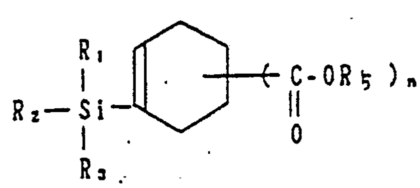

(V)

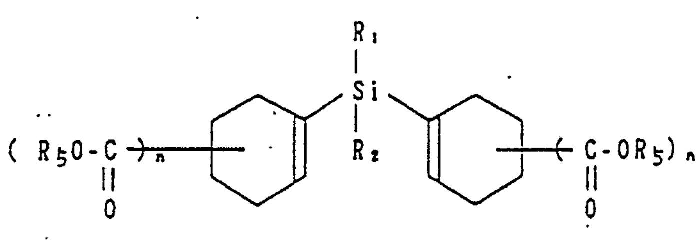

(VI)

wherein each of $R_1$, $R_2$ and $R_3$ means a lower alkoxyl, or one or two thereof mean a lower alkoxyl while the

remainder means a lower alkyl, $R_4$ means either of a saturated and unsaturated $C_1$ - $C_{20}$ alkylacyl and alkylaminoacyl, $R_5$ means either of hydrogen and a lower alkyl, and n is either of 1 and 2, is used in the amount of 0.1 - 5.0 weight parts relative to 100 weight parts of the inorganic filler.

2. Resin composition as set forth in Claim 1, in which said surface treating agent is used in the amount of 0.5 - 2.0 weight parts relative to 100 weight parts of the inorganic filler.

3. Resin composition as set forth in Claim 1, in which each of $R_1$, $R_2$ and $R_3$ means either of ethoxy and methoxy groups, and $R_4$ means any of $COCH_3$, $COC_{11}H_{23}$, $COC_{17}H_{23}$, $COC_{17}H_{35}$ and $CONHC_{12}H_{25}$ in either of the formulae (I) and (II).

4. Resin composition as set forth in Claim 1, in which said surface treating agent is either of 4-trimethoxysilyl-tetrahydrophthalic anhydride and the hydrolyzed product thereof.

5. Resin composition as set forth in Claim 1, in which said surface treating agent is either of di-(4-tetrahydro-phthalyl anhydride)-dimethoxysilane and the hydrolyzed product thereof.

Fig.1

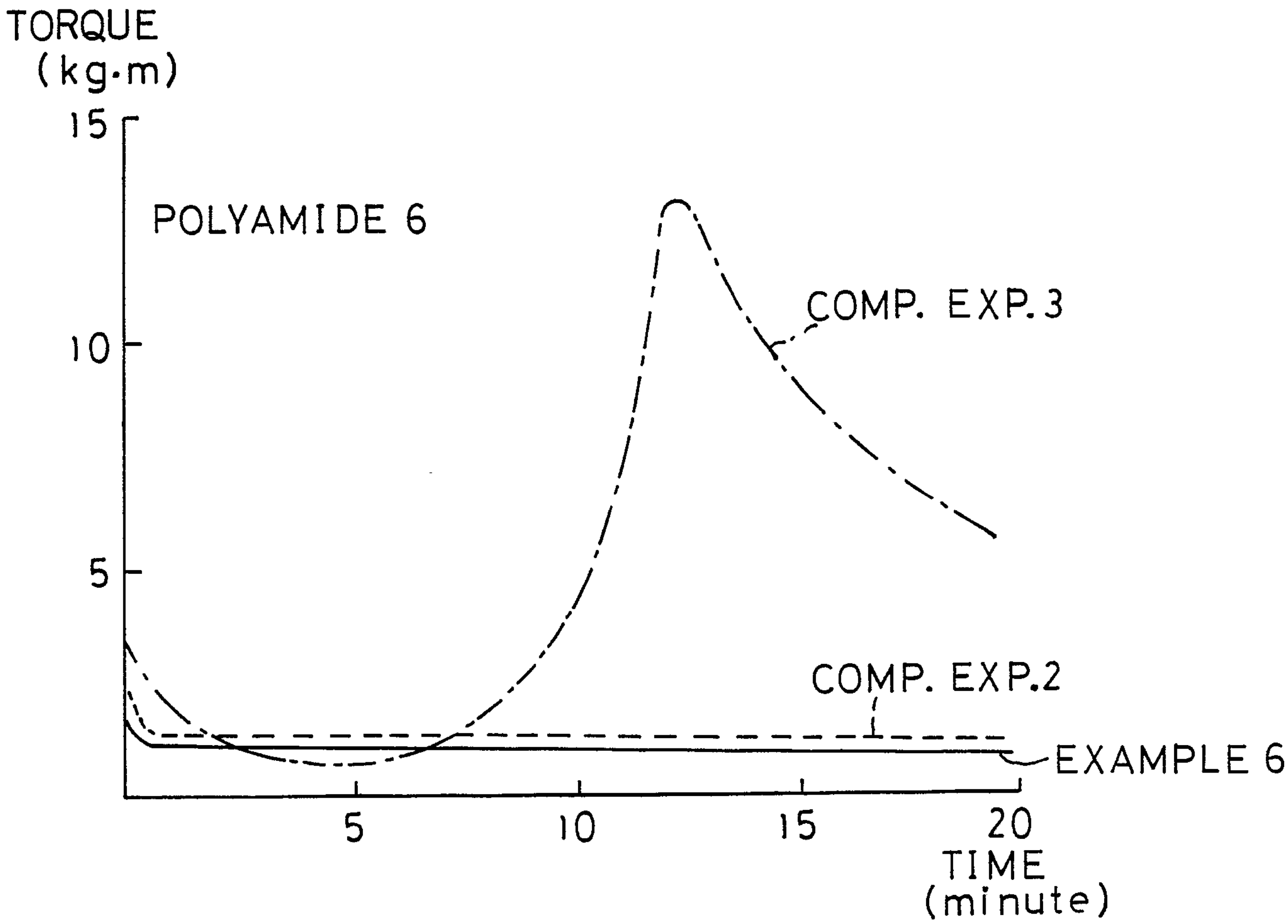
TORQUE
(kg·m)
15
10
5
POLYAMIDE 6
COMP. EXP. 3
COMP. EXP.2
EXAMPLE 6
5
10
15
20
TIME
(minute)

Fig.2

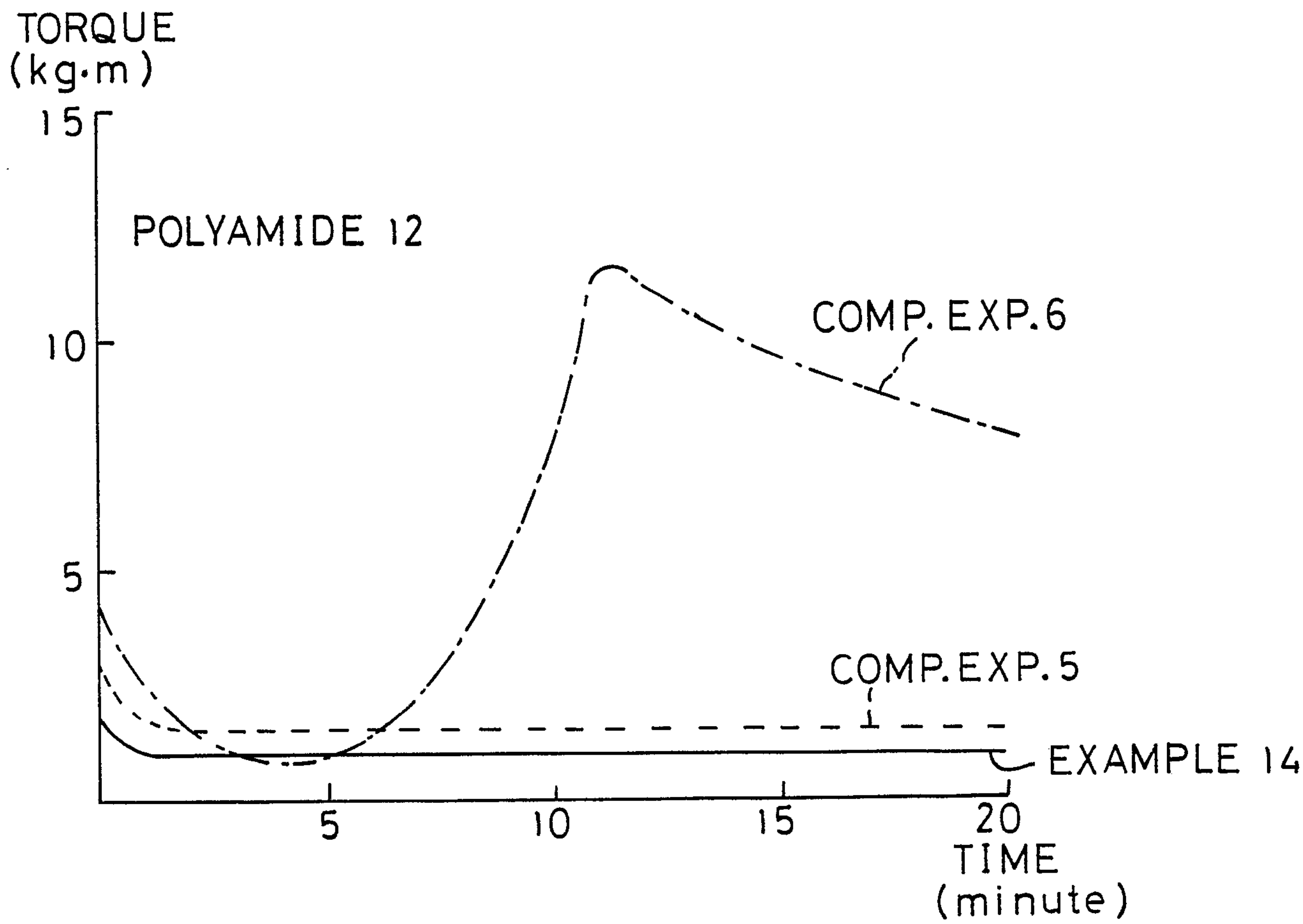
TORQUE
(kg·m)
15
10
5
POLYAMIDE 12
COMP. EXP.6
COMP. EXP. 5
EXAMPLE 14
5
10
15
20
TIME
(minute)

Fig.3

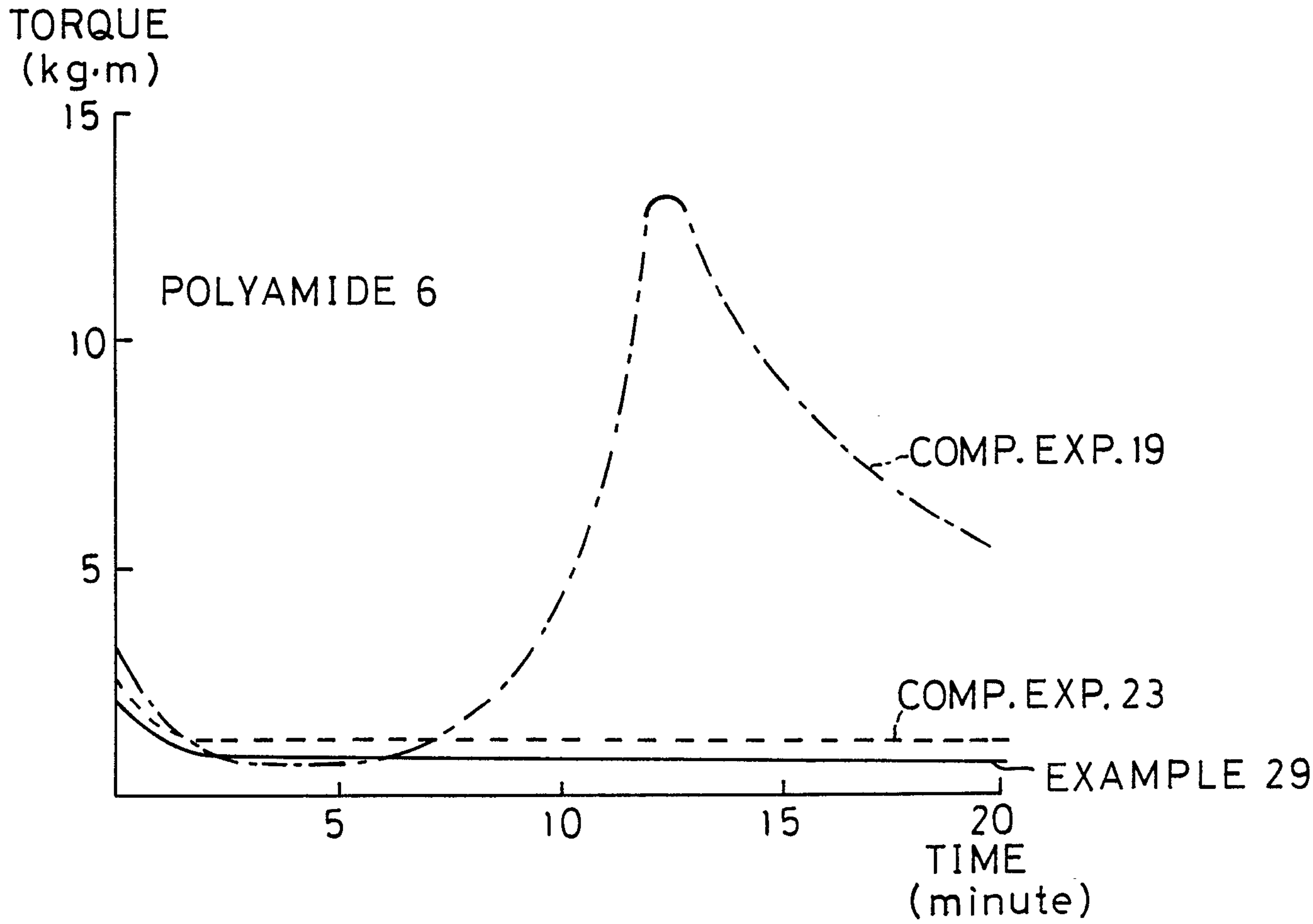
TORQUE
(kg·m)
15
10
5
POLYAMIDE 6
COMP. EXP. 19
COMP. EXP. 23
EXAMPLE 29
5
10
15
20
TIME
(minute)

Fig.4

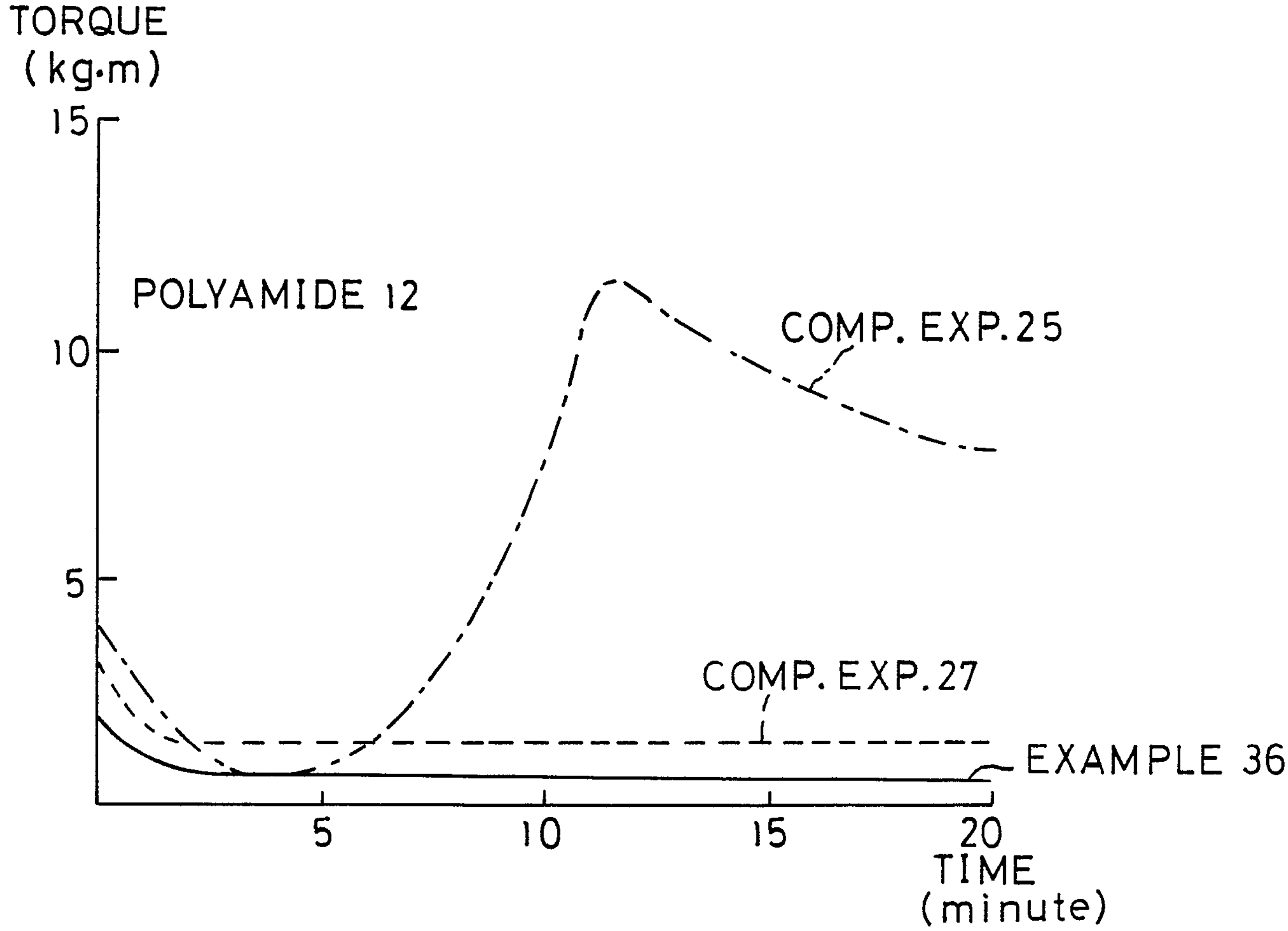
TORQUE
(kg·m)
15
10
5
POLYAMIDE 12
COMP. EXP. 25
COMP. EXP. 27
EXAMPLE 36
5
10
15
20
TIME
(minute)

European Patent Office

# EUROPEAN SEARCH REPORT

Application Number

EP 89 30 3557

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 176 085 (NISSAN CHEMICAL INDUSTRIES LTD) * Claims; page 9, line 11 - page 10, line 3 * | 1 | C 08 K 9/06<br>C 08 K 5/54<br>C 08 L 77/00 |
| A | CHEMICAL ABSTRACTS, vol. 106, no. 9, 2nd March 1987, page 631, abstract no. 67482j, Columbus, Ohio, US; & JP-A-61 205 285 (NISSAN CHEMICAL INDUSTRIES LTD) 11-09-1986 * Abstract * | 1 | |
| A | EP-A-0 077 036 (UNION CARBIDE CORP.) * Claims; page 5, line 8 - page 6, line 27; page 14, lines 7-23; page 16, lines 4-24 * | 1 | |
| A | WO-A-8 606 072 (SCM CORP.) * Claims * | 1 | |
| | | | **TECHNICAL FIELDS SEARCHED (Int. Cl.4)** |
| | | | C 08 K<br>C 08 L |

The present search report has been drawn up for all claims

| Place of search | Date of completion of the search | Examiner |
|---|---|---|
| THE HAGUE | 14-07-1989 | DE LOS ARCOS Y VELAZQUEZ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document